# EUROPEAN PATENT APPLICATION

(11) **EP 1 818 294 A1**
(43) Date of publication of application: **15.08.2007**
(21) Application number: 07100655.5
(22) Date of filing: 17.01.2007
(51) Int. Cl.: B65G 47/71, B65G 15/58

(54) **A system for transferring slim and light flat objects from a single conveyor line to a plurality of different conveyor lines**

(30) Priority: 13.02.2006 IT RE20060019
(71) Applicant: Opem S.p.A., 43100 Parma (IT)
(72) Inventor: Binacchi, Fabio, OPEM S.P.A., 43100 Parma (IT)
(74) Representative: Corradini, Corrado

(57) **Abstract**

A system for transferring slim, light and flat products (100) from a first conveyor line (2) to a plurality of different second conveyor lines (3) comprising a running belt (5) which is permeable to air and located transversally to and above the first conveyor line (2) and the second conveyor lines (3), and fixed suction means (7, 9, 10) for creating depressions in adjacent zones of the running belt (5) independently of one another; the depressions being aimed at attracting and holding the products removed from the first conveyor line (2) in contact with the running belt (5), and thereafter releasing the products (100) at a position corresponding to one of the second transport lines (3).

## Description

The present invention relates to a system for transferring slim, light and flat objects from a single conveyor line to a plurality of different conveyor lines.

As is known, many industrial applications exist in which different products are at first moved along a same automatic conveyor line and subsequently transferred to different lines according to the characteristics thereof, or because of packaging requirements.

An example of this type of application is the food sector and in particular the sector of single-serving pods for coffee machines.

In this field, the single-serving pods are generally produced by a plant working at a very high speed, and are for this reason distanced from the machine on a single automatic conveyor line.

For this reason, in many cases it is necessary to arrange, along the single conveyor line, a system which can transfer the pods to a plurality of different conveyor lines.

A first case is when groups of pods must be supplied to different destinations, for example various process machines, packaging machines or storage environments.

A second case is when the production capacity of the pod-producing machines is so high that it is incompatible with the production capacity of the packaging machines located downstream thereof.

In this case it becomes necessary to transfer the pods to a plurality of different conveyor lines, in order that each line can supply a respective packaging machine with a slower flow of pods than the production machine is putting out.

A third case is when it is necessary to separate pods having different characteristics, in order to set up batches of pods that are compatible with one another.

The aim of the present invention is to make available a system for transferring light and slim flat products coming from a single conveyor line to a plurality of different conveyor lines, which system is able to operate at high speed and without damaging the products.

A further aim of the invention is to achieve the above-mentioned objective with a simple, rational and inexpensive solution.

These aims are attained by the invention as it is characterised in appended claim 1.

The dependent claims describe preferred and/or particularly advantageous embodiments.

Further characteristics and advantages of the invention will emerge from a reading of the following description, provided by way of non-limiting example with the aid of the figures of the accompanying drawings, in which:

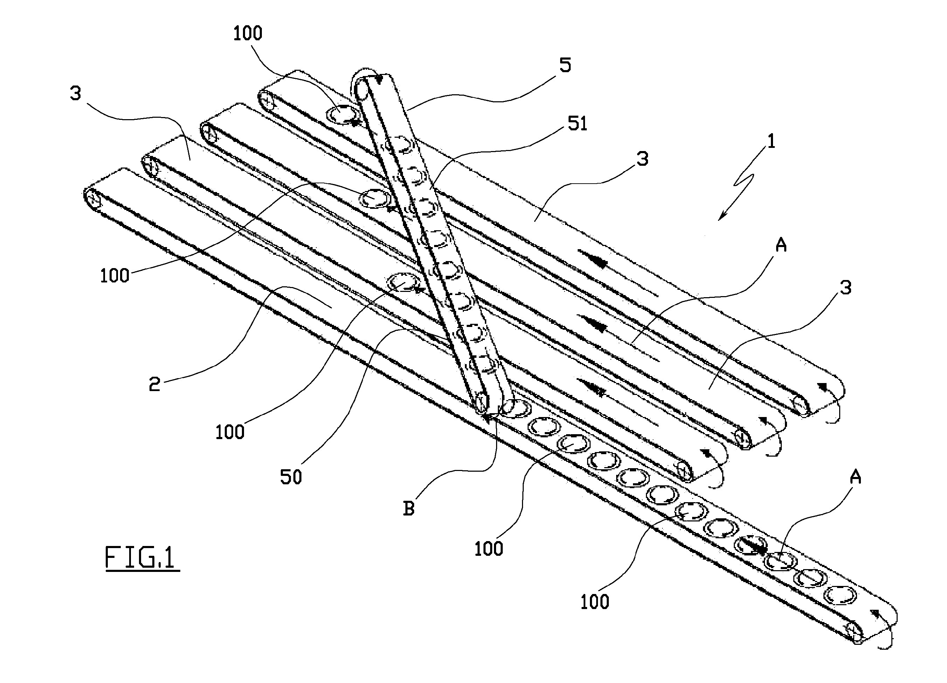

Figure 1 is a schematic perspective view of the coffee pod conveyor system of the invention;
Figure 2 is a plan view of the conveyor system of figure 1;
Figure 3 is a view along section line III-III of figure 2.

In the figures of the drawings, a system 1 is illustrated for transferring single-serving pods 100 for coffee machines from a first conveyor line to a plurality of different conveyor lines.

The first conveyor line is constituted by a first conveyor belt 2, which advances the pods 100 as they emerge from a relative production plant (not illustrated).

The second conveyor lines are located by a side of the first conveyor belt 2, and each of the second conveyor lines is constituted by a conveyor belt 3 which receives a part of the pods 100 and advances them towards specific destinations.

The term "destinations" is intended to mean, for example, other process stations, packaging machines, or simply storage environments.

For greater clarity, in the following description the first conveyor belt 2 will be termed the supply belt, while the second conveyor belts 3 will be termed distancing belts.

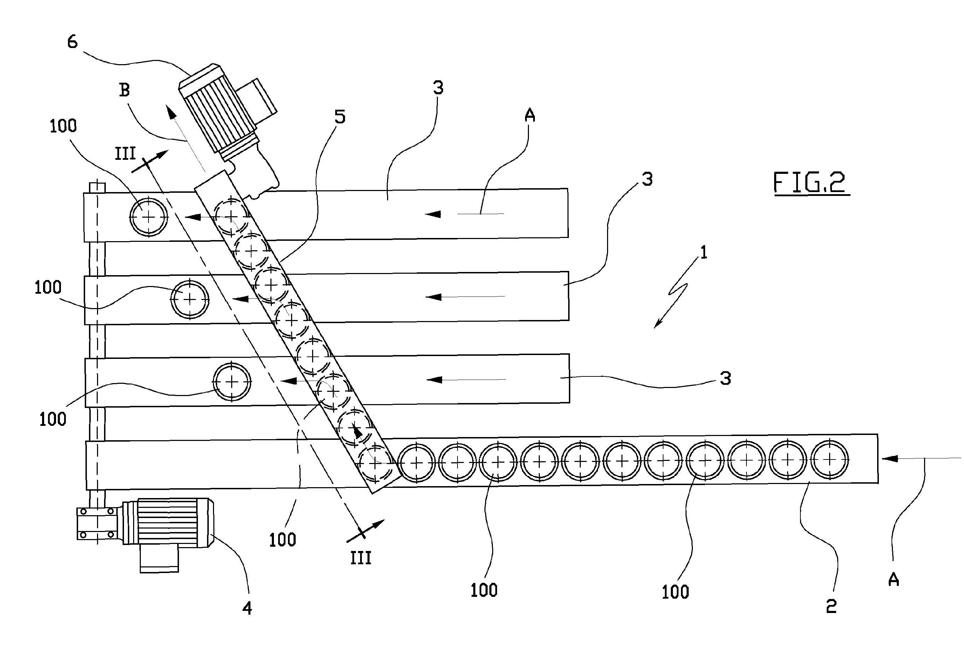

In the illustrated example, the supply belt 2 and the distancing belts 3 lie parallel in a same horizontal plane, and are powered by a common motor 4 which causes them to run at a same speed and in a same advancing direction A (see figure 2).

Overlying the supply belts 2 and the distancing belts 3 is a further conveyor belt, which will be termed a transfer belt 5 hereinafter.

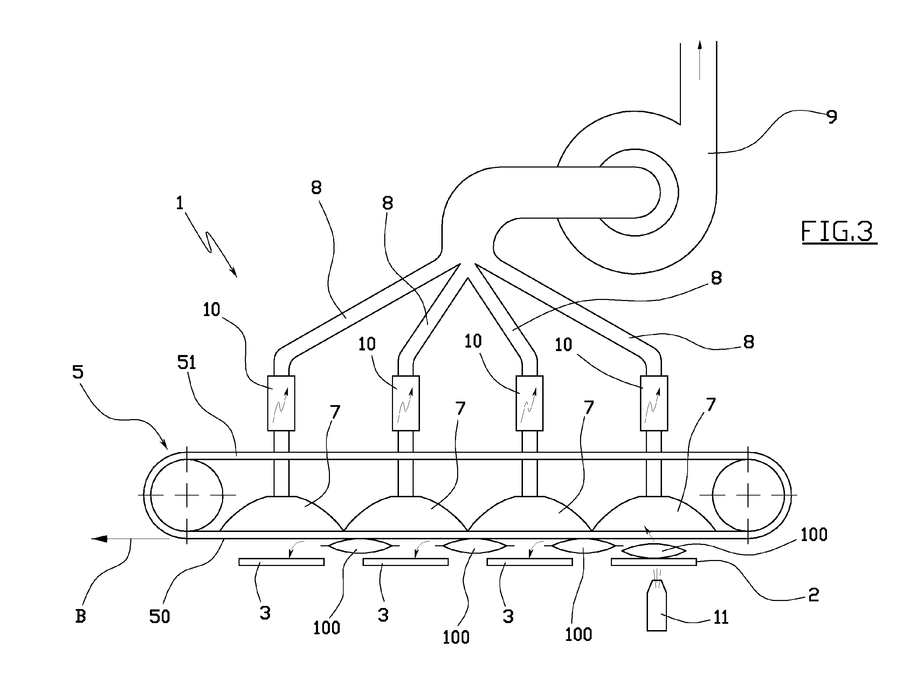

In particular, the lower branch 50 of the transfer belt 5 is separate from the supply belt 2 and the distancing belts 3 by a distance which is just greater than the height or thickness of the pods 100 to be transferred (see figure 3).

The distance is adjustable in order to enable the system 1 to operate with pods 100 of different heights.

As illustrated in figure 2, the transfer belt 5 is arranged transversally with respect to the supply belt 2 and the distancing belts 3, in order to lie above each of them, and is inclined in the advancement direction A of the pods 100.

The transfer belt 5 is powered by a respective motor 6, which causes the lower branch 50 of the transfer belt 5 to move in a predetermined advancement direction B, going from the supply belt 2 towards the distancing belts 3.

The transfer belt 5 runs at a faster rate than the supply belt 2 and the distancing belts 3, the faster rate being in proportional relation to the inclination of the transfer belt 5 with respect to the other belts 2 and 3.

As illustrated in figure 3, between the lower branch 50 and the upper branch 51 of the transfer belt 5 a plurality of suction mouths 7 are located, which are generally bell-shaped.

Each suction mouth 7 is located at an end of a respective connection conduit 8 and is connected there-through with a single suction pump 9 which creates a depression.

The suction mouths 7 are arranged in succession in contact with the lower branch 50 of the transfer belt 5, adjacent to one another.

In particular, the suction mouths 7 are fixed in such a way that the lower branch 50 of the transfer belt 5 runs in constant contact with the suction mouths 7.

The transfer belt 5 is generally permeable to air, and is preferably perforated.

In this way, the suction action exerted by the suction mouths 7 creates a depression in a succession of adjacent zones of the lower branch 50 of the transfer belt 5.

The presence of these depressed zones enables the pods 100 borne on the supply belt 2 to be attracted and raised and held in contact with the lower branch 50 as the lower branch 50 runs.

In particular, the raising of the pods 100 from the supply belt 2 is possible due to the small distance which separates the supply belt 2 from the lower branch 50.

As illustrated in figure 3, the connection conduits 8 of the suction mouths 7 are all intercepted by a respective solenoid valve 10.

The solenoids 10 are selectively caused to open and close the relative connection conduit 8 in order to activate and/or deactivate each single suction mouth 7 independently of the others.

In normal use, the suction mouths 7 are all functioning, except for the suction mouth 7 located vertically above the distancing belt 3 on which the pods 100 are to be transferred.

Thus, when the supply belt 2 brings one of the pods 100 below the transfer belt 5, the aspirating action exerted by the overlying suction mouth 7 attracts the pod 100 upward, holding it in contact with the lower branch 50 of the transfer belt 5.

The transfer belt 5 then advances the pod 100 in direction B, passing over the various distancing belts 3.

During this stage, the pod 100 remains in contact with the lower branch 50 of the transfer belt 5 thanks to the action of the suction mouths 7 located downstream of the first suction mouth 7.

When the pod 100 is at the position of the desired distancing belt 3, the corresponding suction mouth 7 is closed.

In this position, the pod 100 is not subjected to any further suction action and consequently falls by force of gravity onto the underlying distancing belt 3.

Obviously the above-described stages take place at a fast pace and without causing any damage to the pod 100, since the pod 100 is not subjected to any action by mechanical means.

The pods 100 are thus shared among the various distancing belts 3 in a simple fashion, changing time-by-time the suction mouth 7 which is to be deactivated.

The operation is practically instantaneous, as it only requires the action of the solenoids 10 which control the functioning of the suction mouths 7.

Obviously the suction mouth 7 located vertically above the supply belt 2 must be active all the time.

As previously mentioned, in order to ensure that the pods 100 located on the supply belt 2 are attracted into contact with the transfer belt 5, it is normally sufficient to adjust the distance which separates the lower tract 50 of the transfer belt 5 from the supply belt 2; this distance depends on the height of the pods 100 and on the entity of the suction action exerted by the overlying suction mouth 7.

The means for regulating the distance are not illustrated in the present description as they are of known type.

If the adjustment is not sufficient, a nozzle 11 is arranged below the supply belt 2, in a vertically-aligned position with the transfer belt 5, which nozzle 11 generates an air jet directed upwards.

The supply belt 2 should therefore also be air-permeable, preferably perforated, in order that the air jet can strike the transiting pod 100 and raise it by a sufficient quantity for it to be attracted into contact with the lower branch 50 of the transfer belt 5.

Obviously a specialised technician in the sector might bring numerous modifications of a technical-applicational nature to the transfer system 1 described herein without its forsaking the ambit of protection for the present invention.

For example, the illustrated transfer system 1 comprises three distancing belts 3, but it is obvious that the belts 3 could be in any number except less than two.

## Claims

1. A system for transferring slim, light and flat products (100) from a first conveyor line (2) to a plurality of different second conveyor lines (3), **characterised in that** it comprises a running belt (5) which is permeable to air and located transversally to and above the first conveyor line (2) and the second conveyor lines (3), and fixed suction means (7, 9, 10) for creating depressions in adjacent zones of the running belt (5) independently of one another, the depressions being aimed at attracting and holding the products (100) removed from the first conveyor line (2) in contact with the running belt (5), and thereafter releasing the products at a position corresponding to one of the second transport lines (3).

2. The system of claim 1, **characterised in that** the suction means comprise a plurality of suction mouths (7) arranged in succession along the running belt (50), which suction mouths (7) are connected to a suction pump (9) via a respective connection conduit (8), each connection conduit (8) being provided with means for intercepting (10) which selectively open and close the connection conduit (8).

3. The system of claim 2, **characterised in that** the suction mouths (7) exhibit a bell-shaped conformation.

4. The system of claim 2, **characterised in that** the means for intercepting comprise a solenoid (10) for each connection conduit (8).

5. The system of claim 1, **characterised in that** the running belt (5) is perforated.

6. The system of claim 1, **characterised in that** the running belt (5) is inclined with respect to the first conveyor belt (2) and to the second conveyor belts (3).

7. The system of claim 1, **characterised in that** a vertical distance of the running belt (5) from the first transport line (2) is greater by a small amount than a height of the products (100) to be removed from the first transport line (2).

8. The system of claim 7, **characterised in that** the distance is adjustable.

9. The system of claim 1, **characterised in that** it comprises means (11) for generating a jet of air in order to push the products (100) situated on the first transport line (2) upwards into a position below the running belt (5).

10. The system of claim 1, **characterised in that** the first transport line (2) and the second transport lines (3) are each constituted by conveyor belts.

11. The system of claim 1, **characterised in that** the first transport line (2) and the second transport lines (3) all move at a same speed.

12. The system of claim 1, **characterised in that** the running belt (5) moves at a greater speed than the first transport line (2) and the second transport lines (3).
